# DEMANDE DE BREVET EUROPEEN

(11) **EP 0 913 956 A1**
(43) Date de publication de la demande: **06.05.1999**
(21) Numéro de dépôt: 98402653.4
(22) Date de dépôt: 26.10.1998
(51) Int. Cl.: H04B 5/00

(54) **Système de radiocommunication à câble rayonnant**

(30) Priorité: 30.10.1997 FR 9713752
(71) Demandeur: TELEDIFFUSION DE FRANCE, société anonyme, 75015 Paris (FR)
(72) Inventeur: Chopin, Jean-Pierre, 01390 Tramoyes (FR); Pelissier, Guy, 42000 Saint-Etienne (FR); Thivillon, Jean-François, 01600 Trevoux (FR)
(74) Mandataire: Martinet & Lapoux

(57) **Abrégé**

Le système de radiocommunication comprend plusieurs tronçons (CR1, CR2, CR3) de câble rayonnant et plusieurs circuits d'amplification intermédiaire (CAC1a, CAC2a). Le câble propage à la fois unidirectionnellement des premiers signaux de services de radiocommunication et de radiomessagerie (SR1) typiquement entre 30 et 470 MHz et bidirectionnellement des deuxièmes signaux de radiocommunication (SR2) vers 900 MHz et/ou 1800 MHz. Chaque circuit d'amplification filtre unidirectionnellement les premiers signaux depuis la deuxième extrémité (B1, B2) du premier tronçon respectif (CR1, CR2), puis les amplifie et les filtre unidirectionnellement vers la première extrémité (A2, A3) du deuxième tronçon respectif (CR2, CR3), et aussi filtre bidirectionnellement des deuxièmes signaux (SR2) entre la deuxième extrémité de premier tronçon (B1, B2) et un coupleur relié à des amplificateurs desservis par au moins une station de base (BTS2) et filtre bidirectionnellement les deuxièmes signaux (SR2) entre le coupleur et la première extrémité de deuxième tronçon (A2, A3).

## Description

La présente invention concerne un système de radiocommunication à câble rayonnant pour diffuser des signaux radioélectriques en milieux confinés, tels que des tunnels routiers ou ferroviaires, des parkings souterrains, des centres commerciaux, etc...

Actuellement, deux types de système à câble rayonnant qui sont distincts par la nature et les fréquences des signaux à rayonner sont exploités séparément.

Dans un premier système, le câble rayonnant transmet d'une extrémité à l'autre des premiers signaux unidirectionnels compris généralement dans la gamme de fréquence de 30 à 470 MHz, relatifs à des services de secours, des services de radiomessagerie et des stations de radio en modulation de fréquence. Lorsque le câble rayonnant est long, celui-ci est partagé en tronçons dont les extrémités sont réunies par des circuits d'amplification intermédiaires qui amplifient les signaux atténués par le tronçon précédent.

Dans un deuxième système, des deuxièmes signaux bidirectionnels sont seulement transmis mais avec une bande de fréquence nettement plus élevée que les premiers signaux précédents. Ces deuxièmes signaux sont des signaux pour des radiocommunications avec des mobiles dans la bande des 900 MHz et pour un seul opérateur. Le câble rayonnant dans ce deuxième système peut être également partagé en tronçons qui sont couplés les uns aux autres par des répéteurs. Chaque répéteur transmet dans les tronçons de câble rayonnant adjacents aux répéteurs des deuxièmes signaux provenant d'une station de base, et réciproquement retransmet des deuxièmes signaux provenant de terminaux mobiles à la station de base.

La présente invention vise à fournir un système de radiocommunication dans lequel les répéteurs situés entre les extrémités des tronçons du câble rayonnant peuvent à la fois répétés unidirectionnellement les premiers signaux précités et répétés bidirectionnellement les deuxièmes signaux répétés.

A cette fin, un système de radiocommunication comprenant plusieurs tronçons d'un premier câble rayonnant ayant chacun des première et deuxième extrémités, et plusieurs moyens répéteurs interconnectés en cascade et connectés chacun entre la deuxième extrémité d'un premier tronçon respectif et la première extrémité d'un deuxième tronçon respectif, est caractérisé en ce que le premier câble rayonnant propage à la fois unidirectionnellement des premiers signaux avec des fréquences porteuses comprises dans une première bande de fréquence et bidirectionnellement des deuxièmes signaux avec des fréquences porteuses comprises dans une deuxième bande de fréquence supérieure à la première bande de fréquence, et chaque moyen répéteur comprend un premier moyen d'amplification pour amplifier unidirectionnellement des premiers signaux, un deuxième moyen d'amplification pour amplifier bidirectionnellement des deuxièmes signaux, un premier moyen de filtrage pour filtrer unidirectionnellement les premiers signaux depuis la deuxième extrémité du premier tronçon respectif vers le premier moyen d'amplification, un deuxième moyen de filtrage pour filtrer bidirectionnellement des deuxièmes signaux entre la deuxième extrémité du premier tronçon respectif et le deuxième moyen d'amplification, un autre premier moyen de filtrage pour filtrer unidirectionnellement les premiers signaux depuis le premier moyen d'amplification vers la première extrémité du deuxième tronçon respectif et un autre deuxième moyen de filtrage pour filtrer bidirectionnellement des deuxièmes signaux entre le deuxième moyen d'amplification et la première extrémité du deuxième tronçon respectif.

Selon l'invention, à une extrémité du câble rayonnant, dans une tête de câble, sont prévus un premier moyen répéteur pour recevoir et émettre les premiers signaux depuis et vers un réseau de services radioélectriques, une première station de base pour recevoir et transmettre les deuxièmes signaux depuis et vers un premier réseau de radiotéléphonie mobile, un moyen multiplexeur-démultiplexeur pour multiplexer en fréquence les premiers signaux reçus par le premier moyen répéteur avec des deuxièmes signaux ayant au moins une fréquence porteuse prédéterminée et reçus par la première station de base en un signal multiplex appliqué à la première extrémité d'un premier tronçon du premier câble rayonnant et pour appliquer des deuxièmes signaux depuis la première extrémité du premier tronçon à la première station de base, un moyen de transmission à fibre optique pour transmettre des premiers signaux depuis la deuxième extrémité du dernier tronçon du premier câble rayonnant vers le premier moyen répéteur, et plusieurs moyens à fibre optique pour transmettre bidirectionnellement des deuxièmes signaux ayant des fréquences porteuses prédéterminées différentes entre la première station de base et les deuxièmes moyens d'amplification dans lesdits moyens répéteurs.

Les première et deuxième bandes de fréquence s'étendent par exemple entre 30 et 470 MHz et 890 et 947,5 MHz.

Selon une deuxième réalisation, des troisièmes signaux ayant des fréquences porteuses comprises dans une troisième bande de fréquence, par exemple de 902,5 à 960 MHz, sensiblement adjacente à la deuxième bande de fréquence sont des signaux de radiocommunication diffusés bidirectionnellement par le câble rayonnant. Dans cette réalisation, chaque moyen répéteur comprend un troisième moyen d'amplification pour amplifier les troisièmes signaux bidirectionnellement, un troisième moyen de filtrage pour filtrer bidirectionnellement des troisièmes signaux entre la deuxième extrémité du premier tronçon respectif et le troisième moyen d'amplification, un autre troisième moyen de filtrage pour filtrer bidirectionnellement des troisièmes signaux entre le troisième moyen d'amplification et la première extrémité du deuxième tronçon respectif, une deuxième station de base pour recevoir et transmettre les troisièmes signaux depuis et vers un deuxième réseau de radiotéléphonie mobile, ledit moyen de multiplexage et démultiplexage multiplexant en fréquence également des troisièmes signaux de la deuxième station de base ayant au moins une fréquence porteuse prédéterminée et démultiplexant en fréquence depuis la première extrémité du premier tronçon les deuxièmes et troisièmes signaux à appliquer aux première et deuxième stations de base respectivement, et plusieurs moyens à fibre optique pour transmettre bidirectionnellement des troisièmes signaux ayant des fréquences porteuses prédéterminées différentes entre la deuxième station de base et les troisièmes moyens d'amplification.

Selon une quatrième réalisation de l'invention, le câble rayonnant diffuse bidirectionnellement des quatrièmes signaux avec des fréquences porteuses comprises dans une quatrième bande de fréquence, par exemple de 1710 à 1880 MHz, supérieure à la deuxième bande de fréquence. Dans cette réalisation, chaque moyen répéteur comprend un quatrième moyen d'amplification pour amplifier bidirectionnellement les quatrièmes signaux, un quatrième moyen de filtrage pour filtrer bidirectionnellement des quatrièmes signaux entre la deuxième extrémité du premier tronçon respectif et le quatrième moyen d'amplification, un autre quatrième moyen de filtrage pour filtrer bidirectionnellement des quatrièmes signaux entre le quatrième moyen d'amplification et la première extrémité du deuxième tronçon respectif, une troisième station de base pour recevoir et transmettre les quatrièmes signaux depuis et vers un troisième réseau de radiotéléphonie mobile, ledit moyen de multiplexage et démultiplexage multiplexant en fréquence également des quatrièmes signaux de la troisième station de base ayant au moins une fréquence porteuse prédéterminée et démultiplexant en fréquence depuis la première extrémité du premier tronçon au moins les deuxièmes et quatrièmes signaux à appliquer aux première et troisième stations de base respectivement, et plusieurs moyens à fibre optique pour transmettre bidirectionnellement des quatrièmes signaux ayant des fréquences porteuses prédéterminées différentes entre la troisième station de base et les quatrièmes moyens d'amplification.

En général, les premiers, deuxièmes et troisièmes signaux ont des bandes de fréquence inférieures au gigahertz environ, et les quatrièmes signaux ont une bande de fréquence supérieure au gigahertz. Sachant que l'atténuation augmente notablement avec la fréquence dans le câble rayonnant particulièrement au-dessus du gigahertz, le premier câble rayonnant peut présenter au moins un tronçon de câble comprenant deux moyens d'aiguillage pour aiguiller chacun des quatrièmes signaux depuis une extrémité respective du tronçon de câble vers une antenne et les premiers, deuxièmes et troisièmes signaux depuis ladite extrémité respective vers un long tronçon de câble rayonnant reliant les deux moyens d'aiguillage AIG.

Afin d'accroître la sécurité de diffusion des signaux par le système vers des terminaux mobiles, l'invention prévoit d'adjoindre un deuxième câble rayonnant dans lequel chaque moyen répéteur est également interconnecté entre la deuxième extrémité d'un premier tronçon respectif du deuxième câble rayonnant et la première extrémité d'un deuxième tronçon respectif du deuxième câble rayonnant. Le moyen répéteur comprend alors en outre un autre premier moyen d'amplification pour amplifier unidirectionnellement des premiers signaux filtrés par un premier moyen de filtrage depuis la deuxième extrémité du premier tronçon respectif du deuxième câble rayonnant en des signaux amplifiés vers la première extrémité du deuxième tronçon respectif du deuxième câble rayonnant à travers un autre premier moyen de filtrage, un moyen pour appliquer des premiers signaux depuis ledit autre premier moyen d'amplification à la première extrémité du deuxième tronçon respectif du premier câble rayonnant en réponse à un défaut de fonctionnement dans ledit un premier moyen d'amplification, un moyen pour appliquer des premiers signaux depuis le premier moyen d'amplification à la première extrémité du deuxième tronçon respectif du deuxième câble rayonnant en réponse à un défaut de fonctionnement dudit autre premier moyen d'amplification, un moyen pour appliquer des premiers signaux depuis la deuxième extrémité du premier tronçon respectif du deuxième câble rayonnant audit un premier moyen d'amplification en réponse à un défaut dans le premier tronçon respectif du premier câble rayonnant, et un moyen pour appliquer des premiers signaux depuis la deuxième extrémité du premier tronçon respectif du premier câble rayonnant audit autre premier moyen d'amplification en réponse à un défaut dans le premier tronçon respectif du deuxième câble rayonnant.

Selon une autre variante, chaque moyen répéteur comprend outre un autre premier moyen d'amplification, un moyen pour appliquer des premiers signaux depuis ledit autre premier moyen d'amplification vers la première extrémité du deuxième tronçon respectif du premier câble rayonnant en réponse à un défaut de fonctionnement dans ledit un premier moyen d'amplification ou à un défaut dans le premier tronçon respectif du premier câble rayonnant, et un moyen pour appliquer des premiers signaux depuis le premier moyen d'amplification à la première extrémité du deuxième tronçon respectif du deuxième câble rayonnant en réponse à un défaut de fonctionnement dudit autre premier moyen d'amplification, ou à un défaut dans le premier tronçon respectif du deuxième câble rayonnant.

Selon une autre réalisation, le câble rayonnant diffuse plusieurs signaux en modulation de fréquence. Le système de radiocommunication comprend alors plusieurs moyens recevant chacun plusieurs signaux en modulation de fréquence pour répéter respectivement lesdits signaux en modulation de fréquence, et un moyen pour multiplexer en fréquence les signaux en modulation de fréquence répétés avec les premiers signaux et des deuxièmes signaux, ayant de préférence plusieurs fréquences prédéterminées, en un signal multiplex à appliquer à la première extrémité du premier câble rayonnant.

Chaque moyen pour répéter un signal en modulation de fréquence respectif comprend un moyen, tel qu'un unique oscillateur local, pour produire un signal à une fréquence locale respective qui est nettement inférieure à la fréquence porteuse du signal en modulation de fréquence respectif à répéter, à des deuxièmes entrées de premier et deuxième mélangeurs, le premier mélangeur ayant une première entrée recevant lesdits plusieurs signaux en modulation de fréquence de préférence à travers un premier amplificateur et produisant un signal à une fréquence porteuse intermédiaire commune à tous les moyens répéteurs et égale à la différence entre la fréquence porteuse du signal en modulation de fréquence respectif et la fréquence locale respective, et le deuxième mélangeur ayant une entrée recevant le signal à fréquence porteuse intermédiaire commune à travers un filtre passe-bande ayant sensiblement la largeur de bande du signal en modulation de fréquence respectif, et une sortie produisant uniquement le signal en modulation de fréquence respectif avec une fréquence porteuse égale à la somme de ladite fréquence porteuse intermédiaire commune et la fréquence locale respective de préférence à appliquer dans un deuxième amplificateur.

La bande de fréquence des filtres passe-bande dans tous les moyens pour répéter est centrée sur la fréquence porteuse intermédiaire commune qui est sensiblement supérieure à la largeur de la bande de l'ensemble des signaux en modulation de fréquence.

Les moyens pour produire des signaux à fréquences locales peuvent être constitués par un synthétiseur de fréquence programmable.

Le système de radiocommunication peut encore comprendre un modulateur de fréquence pour moduler une porteuse avec sensiblement ladite fréquence porteuse intermédiaire commune par un message prédéterminé, par exemple un message d'urgence à substitution aux signaux en modulation de fréquence, en un signal de modulation. Chaque moyen répéteur de signal en modulation de fréquence comprend alors un moyen pour commuter le signal de modulation avec le signal à la fréquence porteuse intermédiaire commune produit par le filtre passe-bande.

En sortie des moyens pour répéter les signaux en modulation de fréquence peuvent être prévus un moyen pour multiplexer en fréquence les signaux en modulation de fréquence répétés dans les moyens pour répéter, et un filtre passe-bande et un amplificateur de puissance à large bande pour filtrer et amplifier les signaux en modulation de fréquence multiplexés.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de radiocommunication à câble rayonnant selon une première réalisation de l'invention ;
- la figure 2 est un bloc-diagramme schématique d'un système de radiocommunication à câble rayonnant selon une deuxième réalisation de l'invention comprenant plusieurs répéteurs de premiers signaux radioélectriques et plusieurs stations de base de réseaux de radiotéléphonie mobile ;
- la figure 3 montre en détail un circuit d'amplification et de couplage entre deux tronçons de câble rayonnant selon la première réalisation ;
- la figure 4 montre en détail un circuit d'amplification et de couplage entre deux tronçons de câble rayonnant selon la deuxième réalisation ;
- la figure 5 est un bloc diagramme schématique d'un système de radiocommunication à deux câbles rayonnants selon une troisième réalisation de l'invention ;
- la figure 6 montre en détail un circuit d'amplification et de couplage entre deux paires de tronçons de câbles rayonnants dans la troisième réalisation ;
- la figure 7 est un bloc-diagramme schématique d'un système de radiocommunication à câble rayonnant diffusant, en outre, des signaux en modulation de fréquence selon une quatrième réalisation de l'invention ;
- la figure 8 est un bloc-diagramme détaillé d'un circuit répéteur pour signaux en modulation de fréquence inclus dans la quatrième réalisation de l'invention ; et
- la figure 9 montre en détail un répéteur pour signal en modulation de fréquence inclus dans le circuit répéteur montré à la figure 8.

Dans les réalisations préférées décrites ci-après, des valeurs numériques, notamment de bandes de fréquence, sont données à titre d'exemple dans le contexte de services radioélectriques et de la radiotéléphonie mobile sur le territoire français.

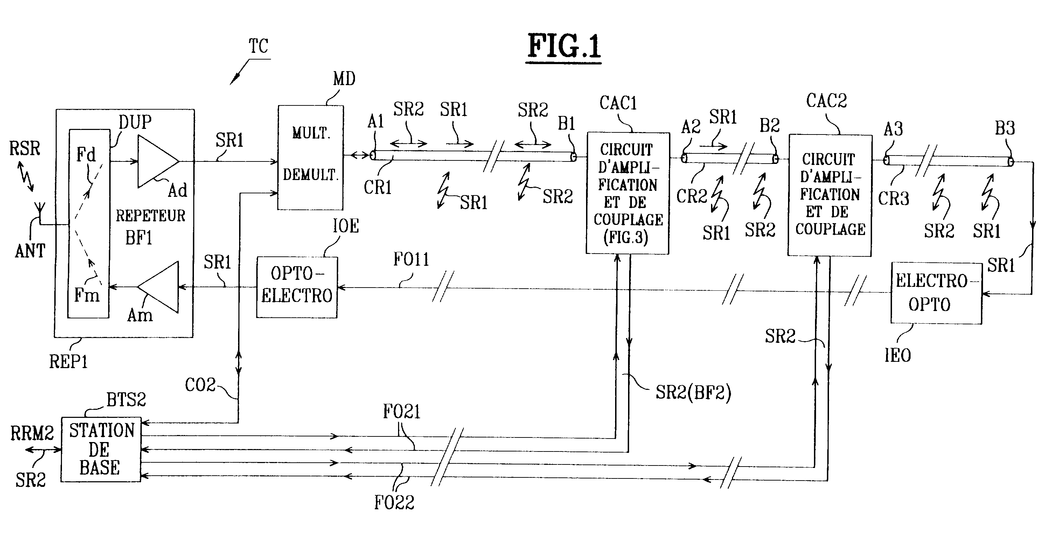

Dans la première réalisation de l'invention montrée à la figure 1, un système de radiocommunication à câble rayonnant comprend un câble rayonnant suspendu par exemple au milieu de la voûte d'un tunnel routier. Compte-tenu des pertes linéiques du câble rayonnant, celui-ci est divisé en plusieurs tronçons, par exemple au nombre de 3, CR1, CR2 et CR3 selon la figure 1. La longueur d'un tronçon peut atteindre 1500 mètres environ. Les extrémités des tronçons du câble rayonnant sont reliées deux à deux par des circuits d'amplification et de couplage CAC1 et CAC2. Chaque tronçon du câble rayonnant est composé classiquement d'un câble coaxial dont le conducteur extérieur est percé de fentes réparties de préférence en motifs périodiques.

Le câble rayonnant selon la première réalisation propage des premiers signaux radioélectriques SR1 ayant une première bande de fréquence BF1 de manière unidirectionnelle depuis une première extrémité Al du câble rayonnant, confondue avec celle du premier tronçon de câble CR1, reliée à une tête de câble TC vers une seconde extrémité du câble rayonnant B3 confondue avec celle du dernier tronçon de câble CR3.

Le câble rayonnant propage également, mais de manière bidirectionnelle, des deuxièmes signaux radioélectriques SR2 ayant une deuxième bande de fréquence BF2 supérieure à la première bande de fréquence BF1 depuis et vers la première extrémité Al du premier tronçon de câble CR1, ainsi que depuis et vers des premières extrémités A2 et A3 des deuxième et troisième tronçons de câble rayonnant CR2 et CR3 et depuis et vers des deuxièmes extrémités B1 et B2 des premier et deuxième tronçons de câble rayonnant CR1 et CR2. Les deuxièmes extrémités B1 et B2 des tronçons CR1 et CR2 sont couplées respectivement aux premières extrémités A2, A3 des tronçons CR2 et CR3 à travers les circuits d'amplification et de couplage CAC1 et CAC2.

Les premiers signaux radioélectriques SR1 ont typiquement une bande des fréquences porteuses BF1 comprises dans une bande BF1 = [30, 470] MHz. Un réseau de services radioélectriques RSR pour cette bande de fréquence recouvre divers services tels que des radiocommunications pour la police, les douanes, les pompiers, la gendarmerie, les taxis et des services de radiomessagerie de type ERMES (European Radio MEssage System).

Dans la tête de câble TC, les premiers signaux radioélectriques sont émis et reçus à travers une antenne ANT et un répéteur REP1. Le répéteur comprend un duplexeur DUP et deux amplificateurs de puissance Ad et Am. Les premiers signaux radioélectriques SR1 à des fréquences descendantes Fd provenant du réseau de services radioélectriques RSR sont reçus par l'antenne ANT et aiguillés et filtrés par le duplexeur DUP vers l'amplificateur Ad afin de les amplifier, puis les appliquer à la première extrémité A1 du tronçon de câble rayonnant CR1 à travers un multiplexeur-démultiplexeur de fréquence MD à circulateurs et filtres. Les premiers signaux radioélectriques SR1 sont diffusés par les tronçons de câble CR1, CR2 et CR3 vers des terminaux mobiles et sont répétés et amplifiés dans les circuits CAC1 et CAC2 comme on le verra dans la suite. Certains des terminaux mobiles étant des radiotéléphones, ceux-ci émettent des deuxièmes signaux radioélectriques à des fréquences montantes Fm dont l'énergie est partiellement captée par le câble rayonnant et se propage vers la deuxième extrémité B3 du câble rayonnant. A cette extrémité B3, une interface électro-optique IEO filtre et convertit les signaux radioélectriques SR1 aux fréquences Fm en des signaux optiques dans une fibre optique FO11 dont l'autre extrémité dans la tête de câble TC est reliée à une interface opto-électrique IOE. Les signaux radioélectriques SR1 aux fréquences montantes Fm sortant de l'interface IOE sont amplifiés dans l'amplificateur de puissance Am du répéteur REP1 puis filtrés dans le duplexeur DUP et émis par l'antenne ANT.

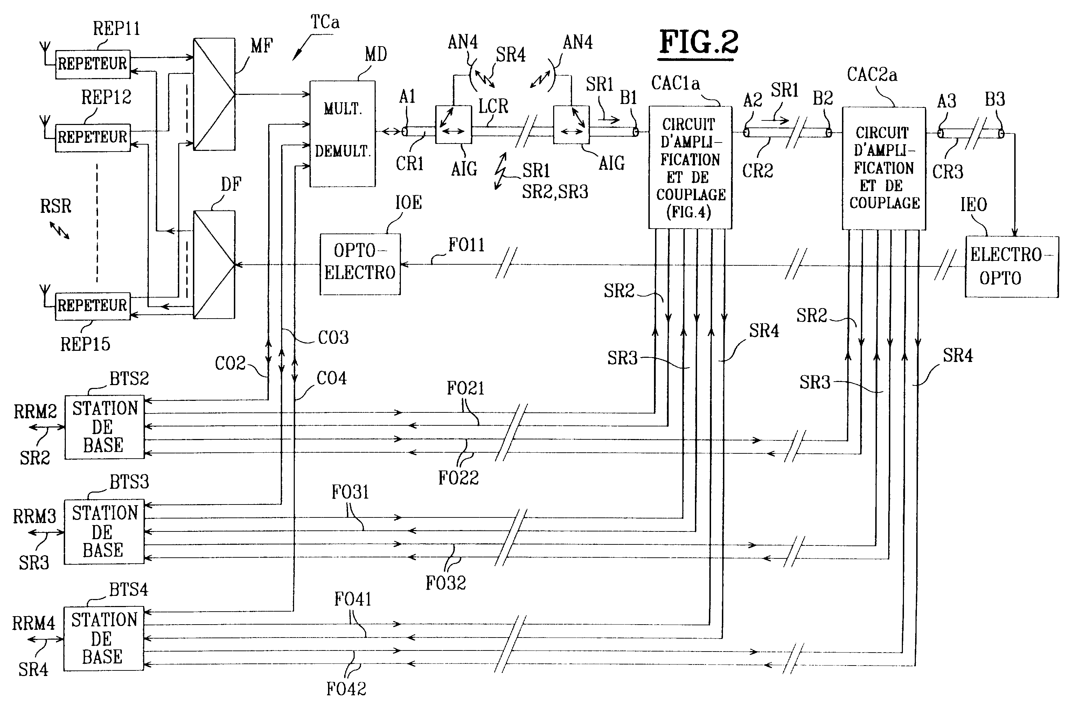

En pratique, comme dans la deuxième réalisation montrée à la figure 2, lorsque les premiers signaux radioélectriques SR1 sont répartis dans des sous-bandes incluses dans la première bande de fréquence BF1, la tête de câble TCa comprend plusieurs répéteurs REP1 ayant des sorties d'amplificateurs Ad reliées au multiplexeur-démultiplexeur MD par l'intermédiaire d'un multiplexeur de fréquence MF et des entrées d'amplificateurs Am réliées à la sortie de l'interface opto-électrique IOE à travers un démultiplexeur de fréquence DF. Par exemple, la tête de câble TCa comprend cinq répéteurs sélectifs REP11 à REP15 respectivement pour les sous-bandes utiles de fréquence 31/41 MHz, 68/87,3 MHz, 151/175 MHz, 406/440 MHz et 440/470 MHz. Les signaux SR1 à des fréquences descendantes différentes sortant des répéteurs REP11 à REP15 sont multiplexés en fréquence dans le multiplexeur MF, et les signaux SR1 à des fréquences montantes différentes sont démultiplexés en fréquence dans le démultiplexeur DF pour être appliqués respectivement aux entrées des répéteurs REP11 à REP15.

Dans la première réalisation illustrée à la figure 1, la tête de câble TC est reliée à un seul réseau de radiotéléphonie mobile RRM2 qui est lui-même un sous-réseau du réseau téléphonique commuté public. Le réseau RRM2 comporte une station de base à transmetteur et récepteur BTS2 incluse dans la tête de câble TC.

Par exemple, le réseau RRM2 est un réseau GSM (Global System Mobile) correspondant au réseau cellulaire de radiocommunications de FRANCE TELECOM dont les fréquences porteuses chacune par exemple pour huit canaux numériques multiplexés dans le temps sont comprises dans la bande BF2 de 890 à 947,5 MHz. Les fréquences montantes depuis des terminaux mobiles propres au réseau RRM2 vers des stations de base sont comprises entre 890 et 902,5 MHz. Les fréquences descendantes depuis les stations de base vers les terminaux mobiles sont comprises entre 935 et 947,5 MHz.

Les premières extrémités A1, A2 et A3 du tronçon de câble rayonnant CR1, CR2, CR3 sont respectivement couplées à un câble coaxial C02 et des paires de fibres optiques F021 et F022 qui convoient chacun des deuxièmes signaux SR2 à au moins une fréquence porteuse montante respective et à au moins une fréquence porteuse descendante respective. Ainsi, l'extrémité Al du tronçon CR1 est reliée bidirectionnellement à la station de base BTS2 par le multiplexeur-démultiplexeur MD et le câble coaxial C02, la première extrémité B1 du tronçon CR1 et la deuxième extrémité A2 du tronçon CR2 sont reliées à la station de base BTS2 à travers le circuit d'amplification et de couplage CAC1 et une paire de fibres optiques F021, et la deuxième extrémité B2 du tronçon CR2 et la première extrémité A3 du tronçon CR3 sont reliées à la station de base BTS2 à travers le circuit d'amplification et de couplage CAC2 et une paire de fibres optiques F022.

Des fréquences porteuses descendantes et montantes différentes pour canaux de radiocommunication sont respectivement fournies aux extrémités A1, B1-A2 et B2-A3 des tronçons de câble rayonnant si bien que le câble rayonnant s'étend dans trois cellules du réseau cellulaire. La première cellule s'étend de l'extrémité A1 du premier tronçon CR1 vers approximativement le milieu de celui-ci. La deuxième cellule s'étend depuis approximativement le milieu du tronçon CR1 vers le milieu du deuxième tronçon CR2. La troisième cellule s'étend approximativement du milieu du tronçon CR2 jusqu'à l'extrémité B3 du dernier tronçon CR3. Un terminal mobile du réseau RRM2 se déplaçant dans le tunnel le long du câble rayonnant change quatre fois de cellule lors de la traversée complète du tunnel. Des fonctionnalités de la station de base BTS2 sont ainsi déportées dans les circuits CAC1 et CAC2 afin que les extrémités des tronçons de câble rayonnant soient alimentées par des sources de signaux à haute fréquence indépendantes, à l'exception de la deuxième extrémité du dernier tronçon CR3.

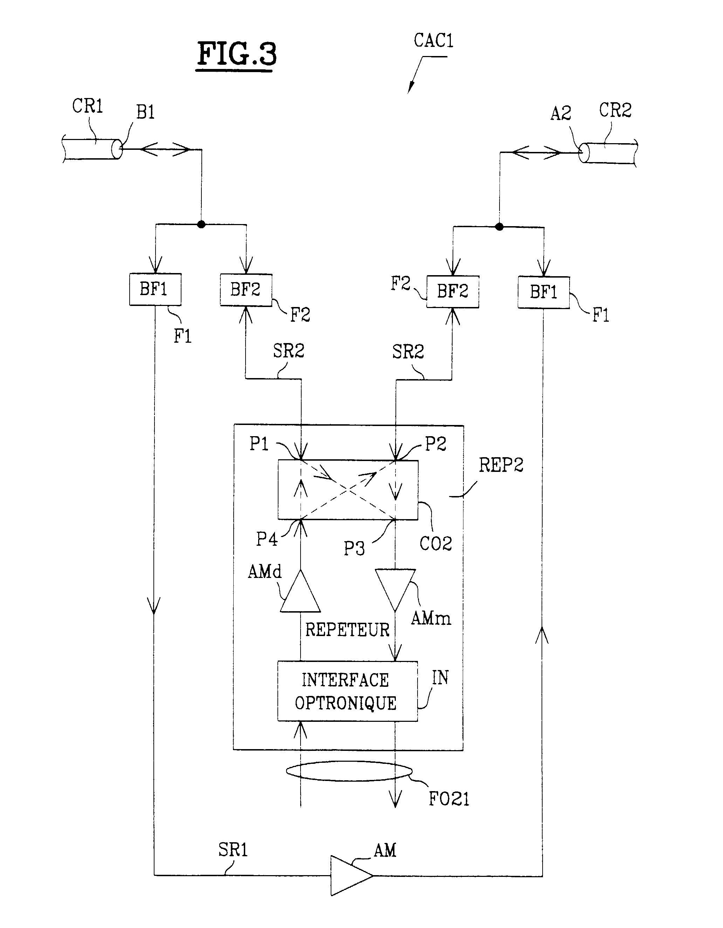

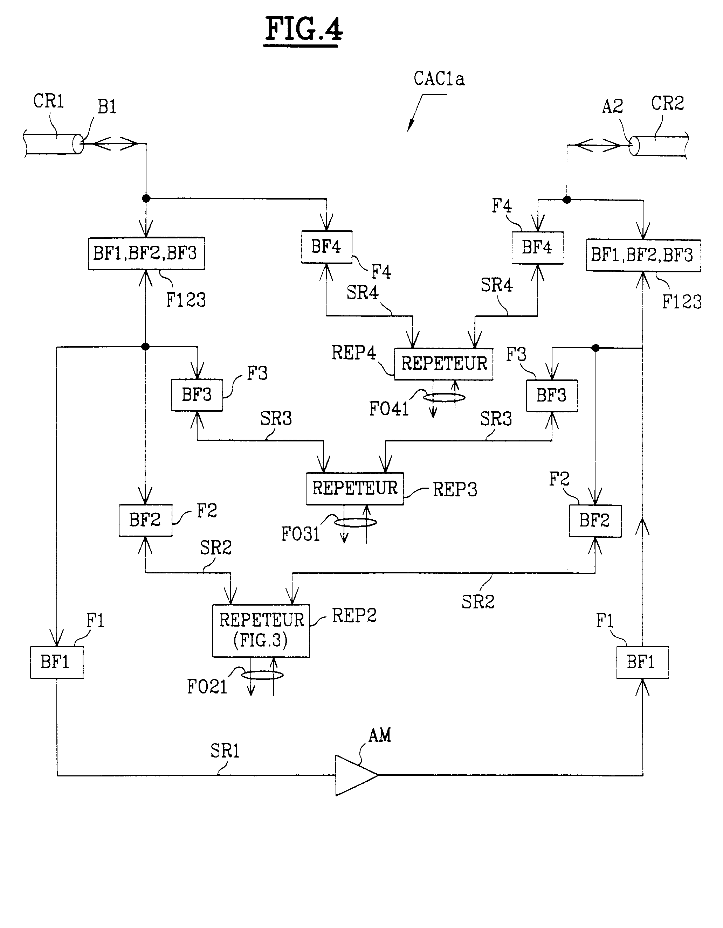

Les circuits d'amplification et de couplage CAC1 et CAC2 étant identiques, l'un d'eux, le circuit CAC1, est décrit ci-après en référence à la figure 3.

Le circuit CAC1 comprend deux voies, une voie unidirectionnelle et une voie bidirectionnelle. La voie unidirectionnelle comprend un amplificateur de puissance AM linéaire en classe A pour amplifier les premiers signaux radioélectriques SR1 à fréquences montantes et descendantes reçus par la deuxième extrémité B1 du tronçon de câble CR1 de manière à transmettre des premiers signaux radioélectriques amplifiés à la première extrémité A2 du tronçon de câble suivant CR2. La voie bidirectionnelle transmet des deuxièmes signaux radioélectriques SR2 à fréquences montantes respectivement depuis l'extrémité B1 du tronçon CR1 et l'extrémité A2 du tronçon CR2 vers l'une des fibres optiques F021 à travers un répéteur REP2, et transmet des deuxièmes signaux radioélectriques à fréquences descendantes depuis l'autre fibre optique F021 respectivement vers les extrémités B1 et A2 des tronçons CR1 et CR2 à travers le répéteur REP2.

Le circuit CAC1 comprend également deux premiers filtres passe-bande F1 avec une bande de fréquence contenant la première bande de fréquence BF1, et deux deuxièmes filtres passe-bande F2 avec une bande de fréquence contenant au moins la deuxième bande de fréquence BF2. L'entrée et la sortie de l'amplificateur AM sont reliées respectivement à l'extrémité de tronçon B1 à travers l'un des premiers filtres F1 et à l'extrémité de tronçon A2 à travers l'autre premier filtre F1. L'amplificateur AM assure l'interconnexion entre les tronçons de câble CR1 et CR2 et amplifie les signaux SR1 provenant du tronçon de câble CR1 de manière à compenser la perte linéique dans celui-ci.

Le répéteur REP2 pour les deuxièmes signaux radioélectriques SR2 comprend un coupleur directif C02. Des premier et deuxième ports P1 et P2 du coupleur C02 sont reliés respectivement aux extrémités de tronçon B1 et A2 à travers les deuxièmes filtres passe-bande BF2. Un troisième port P3 du coupleur C02 est couplé aux premier et deuxième ports P1 et P2 et relié à un amplificateur de puissance AMm qui amplifie des deuxièmes signaux radioélectriques à fréquences montantes qui sont ensuite convertis dans une interface optronique IN en signaux optiques transmis dans l'une des fibres optiques F021 vers la station de base BTS2. L'autre fibre optique F021 transmet des deuxièmes signaux optiques depuis la station de base BTS2 qui sont convertis dans l'interface IN en signaux radioélectriques à fréquences descendantes qui sont amplifiés dans un amplificateur de puissance AMd dont la sortie est reliée à un quatrième port P4 du coupleur C02 qui est couplé aux premier et deuxième ports P1 et P2 de celui-ci. L'interface IN effectue ainsi classiquement des conversions électro-optique et opto-électrique.

Selon la réalisation plus complète montrée à la figure 2, le câble rayonnant propage des troisième et quatrième signaux radioélectriques SR3 et SR4 provenant de deux autres réseaux de radiotéléphonie mobile RRM3 et RRM4. Le réseau RRM3 est par exemple le réseau de radiotéléphonie SFR/GSM auquel est attribuée la bande de fréquences porteuses 902,5 à 960 MHz, c'est-à-dire une troisième bande de fréquence BF3 imbriquée avec la bande fréquence BF2, les fréquences montantes étant comprises entre 902,5 et 915 MHz et les fréquences descendantes entre 947,5 et 960 MHz. Le réseau RRM4 est le réseau BOUYGUES TELECOM/DCS 1800 ayant une bande de fréquence BF4 nettement plus élevée comprise entre 1710 et 1880 MHz, avec des fréquences montantes de 1710 à 1785 MHz et des fréquences descendantes de 1805 à 1880 MHz. Dans la tête de câble TCa, deux stations de base BTS3 et BTS4 respectivement incluses dans les réseaux RRM3 et RRM4 sont reliées par des câbles coaxiaux respectifs C03 et C04 au multiplexeur-démultiplexeur MD comme la station de base BTS2.

Les circuits d'amplification et de couplage CAC1a et CAC2a étant également identiques dans cette deuxième réalisation, seul le circuit CAC1a est détaillé à la figure 4.

Le circuit d'amplification et de couplage CAC1a comprend, outre l'amplificateur AM et le répéteur REP2, deux autres répéteurs REP3 et REP4 adaptés aux fréquences montantes et descendantes respectivement des cellules attribuées au tronçon de câble rayonnant B1(CR1)-A2(CR2) dans les réseaux de radiotéléphonie mobile RTM3 et RTM4. Comme le répéteur REP2, les répéteurs REP3 et REP4 sont reliés aux stations de base BTS3 et BTS4 par des paires de fibres optiques respectives F031 et F041, bien que selon d'autres variantes, chaque paire de fibres optiques peut être remplacée par une seule fibre optique fonctionnant en semi-duplex. De même, le deuxième circuit CAC2a entre les tronçons de câble CR2 et CR3 dans la réalisation montrée à la figure 2 est relié par des paires de fibres optiques F032 et F042 aux stations de base BTS3 et BTS4. Le circuit d'amplification et de couplage CAC1a comprend cinq paires de filtres passe-bande F4, F123, F1, F2 et F3.

Les filtres F4 ont une largeur de bande recouvant au moins la quatrième bande de fréquence BF4 du quatrième réseau de radiotéléphonie mobile et relient respectivement les extrémités B1 et A2 des tronçons de câbles CR1 et CR2 à des premier et deuxième accès d'un coupleur directif inclus dans le répéteur REP4. Le répéteur REP4 est similaire au répéteur REP2.

Les filtres F123 ont des largeurs de bande recouvrant les bandes de fréquence BF1, BF2 et BF3 et relient respectivement les extrémités de tronçon B1 et A2 a des accès des filtres F1, F2 et F3. Les autres accès des filtres F1 sont reliés respectivement à l'entrée et à la sortie de l'amplificateur AM, comme dans le circuit CAC1 montré à la figure 3. Les autres accès des premiers filtres F2 et F3 qui sont reliés à l'extrémité B1 du tronçon de câble CR1 à travers les filtres F123, sont reliés respectivement à des premiers accès de coupleurs directifs inclus dans les répéteurs REP2 et REP3. D'une manière symétrique, les deuxièmes filtres F2 et F3 qui ont des accès reliés à l'extrémité A2 du tronçon de câble CR2 à travers le deuxième filtre F123 ont d'autres accès respectivement reliés à des deuxièmes accès des coupleurs directifs inclus dans les répéteurs REP2 et REP3. Les filtres F2 et F3 ont des largeurs de bande de fréquence recouvrant sensiblement les bandes BF2 et BF3, c'est-à-dire recouvrant les bandes de fréquence [890 - 902,5 ; 935 - 947,5] MHz et [902,5 - 915 ; 947,5 - 960] MHz. En pratique, chaque filtre F2, F3, F4 comprend un filtre passe-bande pour des fréquences montantes respectives et un filtre passe-bande pour des fréquences descendantes respectives.

Ainsi chacun des circuits CAC1a et CAC2a à la fois amplifie et répète les premiers signaux radioélectriques SR1 entre deux tronçons de câble rayonnant CR1 et CR2, CR2 et CR3, tout en déportant la fonction d'émission et de réception des stations de base BTS2, BTS3 et BTS4 à la jonction des tronçons de câble rayonnant.

Comme montré également à la figure 2, lorsqu'un tronçon de câble rayonnant, tel que le tronçon CR1, est trop long, par exemple supérieur à 300 mètres environ, les quatrièmes signaux radioélectriques SR4 à très haute fréquence sont très atténués d'une extrémité à l'autre extrémité. Pour y remédier, deux aiguilleurs AIG sont insérés dans le tronçon de câble rayonnant CR1 à une distance inférieure à environ 300 mètres des extrémités Al et B1 et ont chacun deux accès respectivement reliés à un long tronçon de câble rayonnant LCR pouvant atteindre une longueur de 500 mètres environ et à une antenne AN4 avec amplificateurs et duplexeur. Le tronçon LCR propage des signaux inférieurs à la bande de fréquence BF4, c'est-à-dire les signaux radioélectriques compris dans les bandes FB1, FB2 et FB3. Les antennes AN4 diffusent dans le tunnel et reçoivent des quatrièmes signaux radioélectriques SR4. Aux fréquences comprises dans la bande BF4, l'atténuation de propagation dans le tunnel est nettement inférieure à celle dans le tronçon de câble rayonnant LCR.

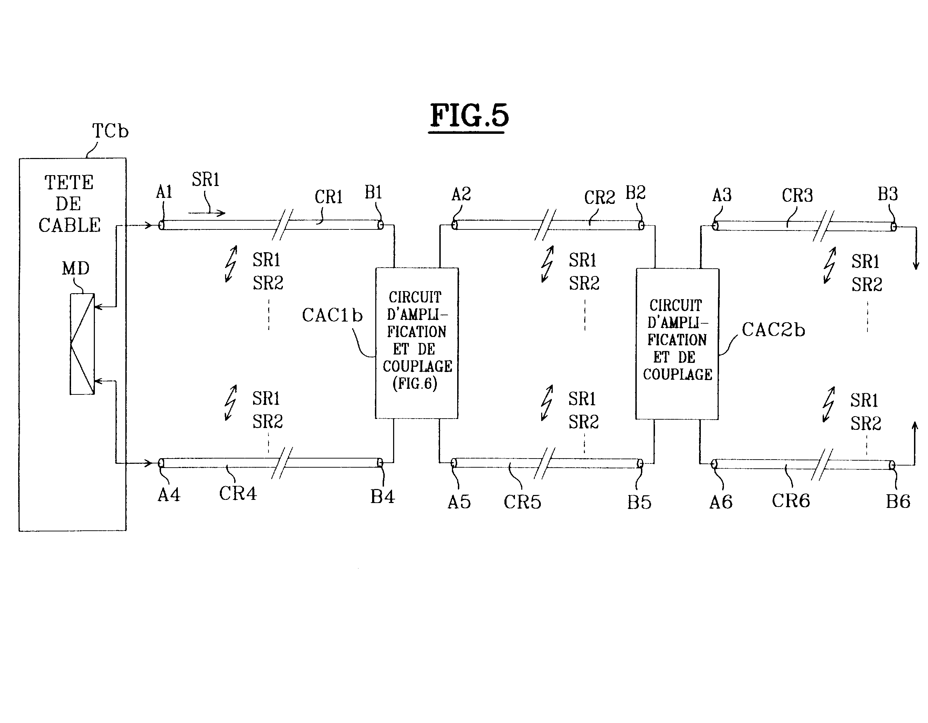

Selon la troisième réalisation de l'invention montrée à la figure 5, un système de radiocommunication comprend deux câbles rayonnants installés parallèlement sous la voûte du tunnel. Le premier câble rayonnant comprend des tronçons CR1, CR2 et CR3 et le deuxième câble rayonnant comprend des tronçons CR4, CR5 et CR6 respectivement identiques à ceux du premier câble rayonnant. Les deux câbles s'étendent à partir de premières extrémités A1 et A4 reliées à une tête de câble TCb vers des deuxièmes extrémités B3 et B6. La tête de câble TCb est sensiblement analogue à la tête de câble TCa, et le multiplexeur-démultiplexeur MD répartit la puissance des signaux entre les extrémités A1 et A4 des deux câbles rayonnants.

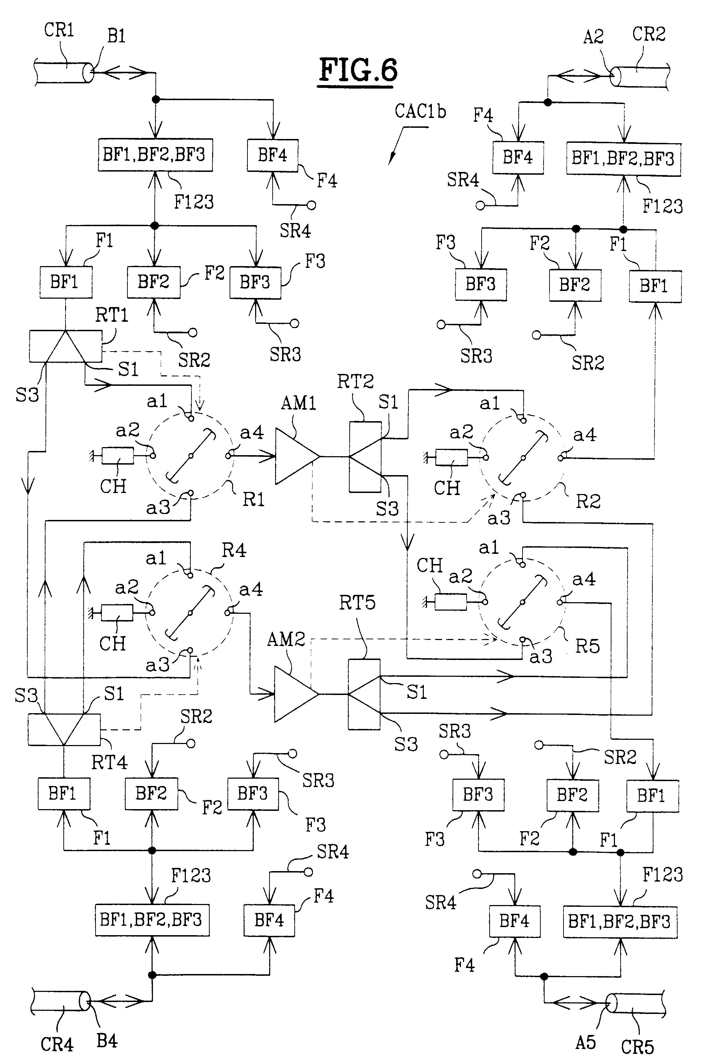

Les modifications apportées par la troisième réalisation dans les circuits d'amplification et de couplage CAC1b et CAC2b qui sont identiques, sont montrées dans la figure 6 relative au premier circuit CAC1b entre les paires de tronçons de câble CR1-CR4 et CR2-CR5.

A partir de chacune des extrémités B1, A2, B4 et A5 des tronçons de câble reliés au circuit CAC1c, on retrouve un groupe de cinq filtres F4, F123, F1, F2 et F3 agencés de la même manière que dans le circuit CAC1a montré à la figure 4 et reliés de la même manière par des répéteurs et des paires de fibres optiques aux stations de base BTS2, BTS3 et BTS4. Le circuit CAC1b comprend quatre répartiteurs de puissance RT1, RT2, RT4 et RT5 et quatre relais coaxiaux R1, R2, R4 et R5 afin que les deux câbles rayonnants fonctionnent indépendamment l'un de l'autre normalement et plus particulièrement afin que des signaux SR1 dans la première bande de fréquence BF1 soient amplifiés respectivement dans des amplificateurs AM1 et AM2 lors du passage d'un tronçon de câble vers le tronçon de câble suivant dans les câbles rayonnants. Les relais R1 à R5 assurent au maximum la diffusion des services radioélectriques et des radiocommunications du réseau RSR dans le tunnel lorsque l'un des amplificateurs AM1 et AM2 est en panne, ou bien lorsque l'un des tronçons CR1 et CR4 en amont du circuit CAC1b suivant le sens de propagation des premiers signaux radioélectriques SR1 est défaillant, par exemple suite à une coupure du tronçon de câble.

Chaque relais coaxial R1, R2, R4 et R5 comporte quatre accès a1, a2, a3 et a4. Tous les accès a2 des relais coaxiaux sont reliés à une charge d'impédance caractéristique CH.

Les accès al des relais R1 et R4 sont reliés à des premières sorties S1 des répartiteurs RT1 et RT4. Les accès a3 des relais R1 et R4 opposés aux accès al sont reliés à des deuxièmes sorties S3 des répartiteurs RT4 et RT1. De cette manière, les répartiteurs RT1 et RT4 respectivement reliés aux sorties des filtres F1 pour les premiers signaux radioélectriques transmis par les tronçons de câble CR1 et CR4 appliquent chacun ces signaux à la fois aux deux relais R1 et R4. Les amplificateurs AM1 et AM2 sont interconnectés entre les accès a4 des relais R1 et R4 respectivement opposés aux accès a2 de ces relais et des entrées des répartiteurs RT2 et RT5, respectivement. Comme les répartiteurs RT1 et RT4, les répartiteurs RT2 et RT5 ont des premières sorties S1 reliées respectivement aux accès al des relais coaxiaux R2 et R5, et des deuxièmes sorties S3 reliées respectivement aux accès a4 des relais R5 et R3. Ces connexions permettent de répartir les signaux radioélectriques sortant de chacun des amplificateurs AM1 et AM2 en direction des tronçons suivants CR2 et CR5 des deux câbles rayonnants. Les quatrièmes accès a4 des relais R2 et R5 opposés aux accès a2 de ces relais sont respectivement reliés aux entrées des deux autres filtres F1 du côté des extrémités A2 et A5 des tronçons de câble suivants CR2 et CR5.

En fonctionnement normal, comme illustré à la figure 6, les accès al et a4 sont reliés et les accès a2 et a3 sont reliés dans chacun des relais R1, R4, R2 et R5. Des premiers signaux radioélectriques SR1 dans les tronçons CR1 et CR4 traversent les sorties S1 des répartiteurs RT1 et RT4 et sont amplifiés normalement par les amplificateurs AM1 et AM2 pour être transmis dans les tronçons CR2 et CR5 respectivement à travers les sorties S1 des répartiteurs RT2 et RT5. Toutes les sorties S3 des répartiteurs RT1, RT2, RT4 et RT5 sont reliées aux charges CH.

Des défauts de fonctionnement des amplificateurs AM1 et AM2 et des défauts dans les tronçons de câble CR1 et CR4 sont détectés de préférence en sortie des amplificateurs AM1 et AM2 et dans les répartiteurs RT1 et RT4 par absence d'un signal de supervision transmis en permanence depuis les stations de base BTS2, BTS3, BTS4 dans les tronçons des câbles rayonnants. La fréquence du signal de supervision est comprise dans la bande BF1, entre des sous-bandes utiles de celle-ci.

Lorsque le signal de supervision n'est pas détecté à la sortie de l'amplificateur AM1, ce qui indique un défaut de fonctionnement dans cet amplificateur, le relais R2 bascule afin que les accès al et a2 et les accès a3 et a4 soient respectivement connectés dans ce relais. Les trois autres relais R1, R4 et R5 demeurent immobiles à leur état normal. La sortie de l'amplificateur défaillant AM1 est alors reliée à la charge CH du relais R2, et la sortie S3 du répartiteur RT5 est reliée à l'extrémité A2 du tronçon de câble CR2 du premier câble rayonnant à travers les accès reliés a3 et a4 du relais R2. Malgré la défaillance de l'amplificateur AM1, les premiers signaux radioélectriques SR1 transmis dans le tronçon de câble CR4 sont également retransmis dans le tronçon de câble suivant CR2 du premier câble rayonnant.

De même, lorsqu'un détecteur en sortie de l'amplificateur AM2 signale l'absence du signal de supervision, celui-ci commande seulement le basculement du relais R5, les trois autres relais R1, R2 et R4 demeurant à leur état de connexion normal. Les accès al et a2 du relais R5 sont connectés, ce qui relie la sortie de l'amplificateur AM2 à la charge CH du relais R5. Les accès a3 et a4 du relais R5 sont connectés, ce qui relie la sortie de l'amplificateur non défaillant AM1 à l'extrémité A5 du tronçon de câble CR5, à travers la sortie S3 du répartiteur RT2. Des signaux SR1 transmis par le tronçon de câble CR1 sont ainsi amplifiés et répartis dans les tronçons de câble CR2 et CR5.

Une coupure ou autre défaillance dans le tronçon de câble CR1 en amont du circuit CAC1b suivant la direction de propagation des premiers signaux radioélectriques SR1 est signalée par un détecteur de signal de supervision dans le répartiteur RT1 qui commande le basculement du relais R1, les autres relais R2, R4 et R5 étant à leur état normal. Dans le relais R1, les accès a1 et a2 sont connectés à la charge CH. Les accès a3 et a4 du relais R1 sont connectés ensemble afin que des signaux radioélectriques SR1 provenant du premier tronçon non défaillant CR4 du second câble rayonnant traversent le répartiteur RT4 et soient amplifiés dans l'amplificateur AM1 pour être transmis dans le tronçon de câble CR2 du premier câble rayonnant défaillant, en aval du circuit CAC1b. La continuité des premiers signaux radioélectriques est ainsi assurée dans les tronçons des deux câbles rayonnants en aval du circuit CAC1c.

De même, un détecteur dans le répartiteur RT4 détecte l'absence du signal de supervision lorsque le tronçon de câble en amont CR4 présente par exemple une coupure. Le détecteur dans le répartiteur RT4 commande alors le relais R4 pour connecter les accès a1 et a2 à la charge CH et les accès a3 et a4 ensemble afin de relier la sortie S3 du répartiteur RT1 à l'entrée de l'amplificateur AM2, les autres relais R1, R2 et R5 demeurant dans leur état normal ; des signaux radioélectriques SR1 propagés dans le tronçon de câble CR1 sont ainsi répartis dans les tronçons de câble en aval CR2 et CR5 à travers les paires de relais R1-R2 et R4-R5.

Selon une variante, les répartiteurs RT1 et RT4 et les relais R1 et R4 sont supprimés, et des détecteurs de signal de supervision sont prévus aux sorties des deux filtres F1, du côté des extrémités de tronçon de câble B1 et A4, pour commander respectivement les relais R2 et R5. Les sorties des filtres précités F1 sont reliées directement aux entrées des amplificateurs AM1 et AM2. Une coupure dans le tronçon CR1 provoque un basculement du relais R2 comme pour une défaillance de l'amplificateur AM1 ; de même, une coupure dans le tronçon CR4 provoque un basculement du relais R5 comme pour une défaillance de l'amplificateur AM2.

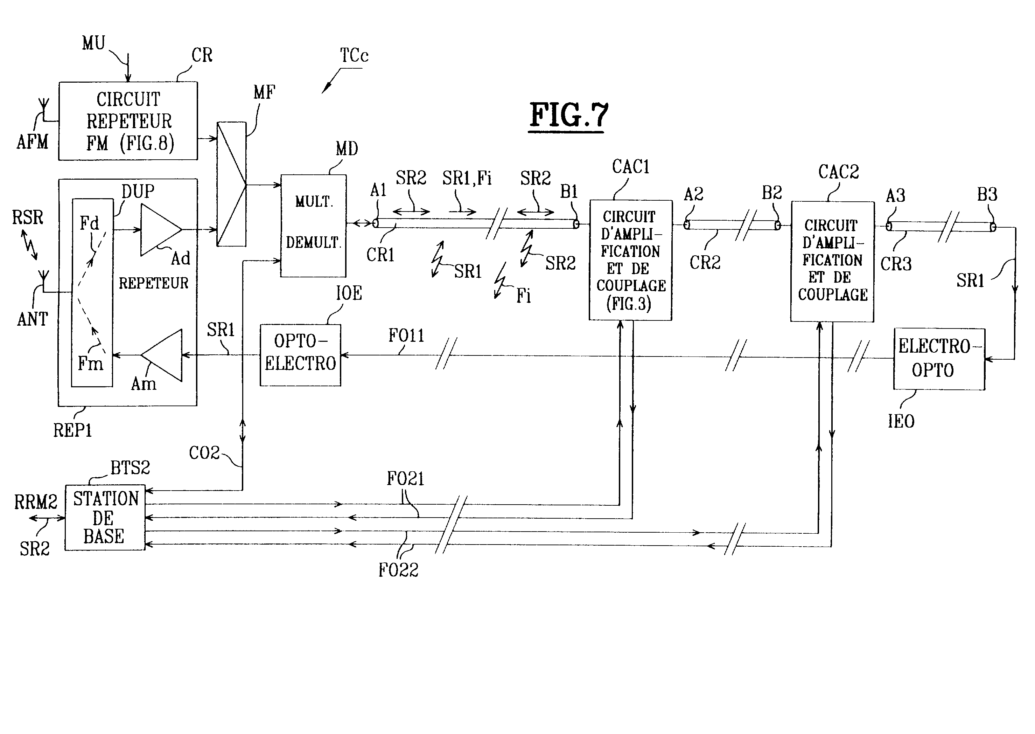

Selon la quatrième réalisation de l'invention montrée à la figure 7, un système de radiocommunication à câble rayonnant diffuse également des signaux de stations de radio en modulation de fréquence dans une bande BFM comprise entre 87,5 et 108 MHz. Cette quatrième réalisation est montrée dans la figure 7 comme une variante de la première réalisation montrée à la figure 1, bien que cette variante puisse être adaptée aux réalisations montrées aux figures 2 et 5, comme cela apparaîtra ci-après.

Dans la tête de câble TCc selon la quatrième réalisation, on retrouve un ou plusieurs répéteurs REP1 et au moins une station de base BTS2. La tête de câble TCc comprend en outre un circuit répéteur CR pour signaux en modulation de fréquence reçus par une antenne AFM. Une sortie du circuit répéteur CR est reliée à un multiplexeur de fréquence MF qui mélange les signaux en modulation de fréquence FM avec les premiers signaux radioélectriques SR1 à fréquence descendante sortant d'amplificateurs Ad dans le répéteur REP1, ou les répéteurs REP11 à REP15, afin d'appliquer un signal multiplex en fréquence à l'entrée du multiplexeur-démultiplexeur MD relié à la première extrémité Al du câble rayonnant CR1-CR2-CR3. Les signaux en modulation de fréquence sont diffusés d'une extrémité Al à l'autre extrémité B3 du câble rayonnant. L'interface électro-optique IEO contient un filtre coupe-bande pour ne pas retransmettre les signaux en modulation de fréquence vers la tête de câble TCc.

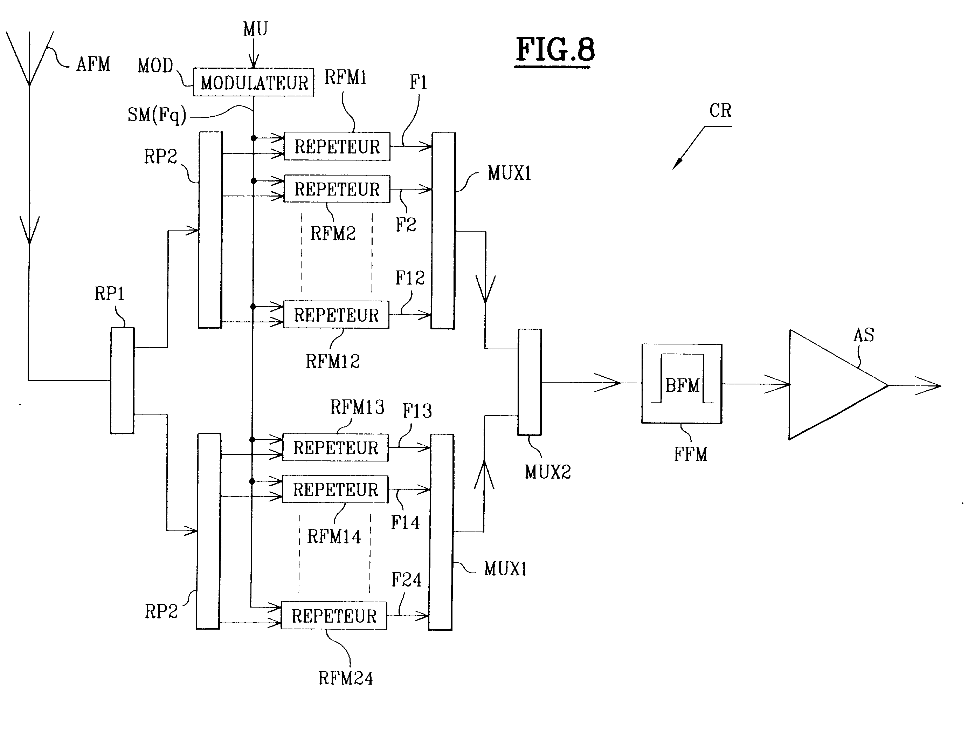

Le circuit répéteur CR est montré en détail à la figure 8. Selon la réalisation illustrée, le circuit répéteur CR régénère deux groupes de 12 signaux en modulation de fréquence respectivement dans des répéteurs RFM1 à RFM12 et RFM13 à RFM24. Les entrées des douze répéteurs de chaque groupe sont reliées aux entrées d'un répartiteur de puissance respectif 1-vers-6 RP2 ayant une entrée reliée à une sortie respective d'un répartiteur de puissance 1-vers-2 RP1 dont l'entrée est reliée à l'antenne AFM. Les sorties des douze répéteurs de chaque groupe sont reliées aux entrées d'un multiplexeur de fréquence respectif 6-vers-1 MUX1 ayant une sortie reliée à une entrée respective d'un multiplexeur de fréquence 2-vers-1 MUX2 dont la sortie est reliée à un filtre passe-bande FFM suivi d'un amplificateur de sortie à large bande AS.

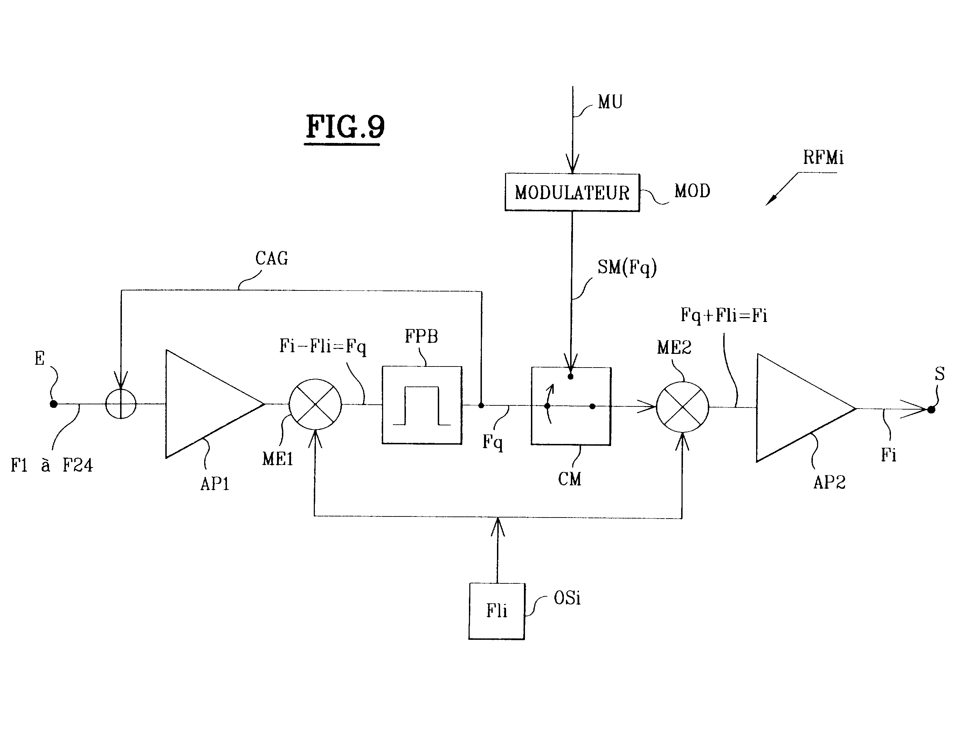

Tous les répéteurs RFM1 à RFM24 étant identiques, à des oscillateurs locaux pour fréquences hétérodynes locales près, l'un d'eux désigné par RFMi est montré en détail à la figure 9, i étant un entier compris entre 1 et 24.

Le répéteur RFMi comprend depuis une entrée E reliée au répartiteur de puissance respectif 1-vers-6 RP2, un amplificateur à large bande AP1, un premier mélangeur ME1, un filtre passe-bande à quartz à bande passante étroite FPB, un deuxième mélangeur ME2 et un deuxième amplificateur de puissance AP2 dont la sortie S est reliée au multiplexeur de fréquence respectif 6-vers-1 MUX1.

Un unique oscillateur local OSi applique un signal de fréquence locale Fli à la fois à des deuxièmes entrées des mélangeurs ME1 et ME2. La sortie du mélangeur ME1 produit un signal à une fréquence porteuse intermédiaire Fq = Fi - Fli. La fréquence Fq est indépendante de la fréquence porteuse du signal en modulation de fréquence à répéter et commune à tous les répéteurs RFM1 à RFM24. La sortie du mélangeur ME2 produit un signal en modulation de fréquence à la fréquence porteuse respective Fi = Fq + Fli. La fréquence Fi du signal, dit également canal, en modulation de fréquence à répéter par le répéteur RFMi est sélectionnée dans la bande de modulation de fréquence BFM = [87,5 ; 108] MHz de l'ensemble des signaux en modulation de fréquence reçus par le mélangeur ME1, en fonction de la fréquence hétérodyne Fli. En variante, à la place des oscillateurs OS1 à OS24 à fréquences locales dans les répéteurs RFM1 à RFM24, un synthétiseur de fréquence programmable produit 24 signaux à fréquences locales F11 à F124 réparties dans la largeur de la bande BFM, qui sont appliqués respectivement aux 24 paires de mélangeurs dans les répéteurs.

La bande passante du filtre FPB est centrée sur la fréquence porteuse intermédiaire commune Fq = 21,4 MHz sensiblement supérieure à la largeur de 20,5 MHz de la bande BFM et a la largeur de 160 kHz de chacun des canaux en modulation de fréquence (signaux F1 à F24), ce qui limite en sortie du circuit CR le bruit de fond et la génération de raies d'intermodulation avec des signaux à fréquences porteuses voisines régénérés par les autres répéteurs RFM1 à RFM24. Les filtres FPB dans tous les répéteurs RFM1 à RFMI sont ainsi identiques.

La sortie du filtre FPB est reliée à une borne de commande automatique de gain CAG du premier amplificateur AP1 de manière à adapter le gain de l'amplificateur AP1 au niveau du signal sélectionné en modulation de fréquence.

Le répéteur à modulation de fréquence RFMi filtre ainsi le signal en modulation de fréquence à la fréquence respective Fi et l'amplifie séparément des 23 autres signaux en modulation de fréquence reçus par la tête de câble TCc pour qu'il soit diffusé par le câble rayonnant à destination des usagers dans le tunnel, pour fournir un signal filtré et amplifié contenant l'information à basse fréquence contenue dans le signal en modulation de fréquence respectif capté par l'antenne AFM et multiplexé en fréquence avec les 23 autres signaux en modulation de fréquence. Le circuit répéteur CR traite ainsi en "isofréquence", c'est-à-dire à travers la fréquence intermédiaire commune Fq, la diffusion de chacun des signaux en modulation de fréquence aux fréquences porteuses F1 à F24.

Comme montré aux figures 8 et 9, le circuit répéteur CR comprend un modulateur de fréquence MOD recevant un signal d'urgence à basse fréquence ou numérique MU et relié à une entrée auxiliaire commune aux répéteurs RFM1 à RFMI. Le modulateur MOD produit un signal de modulation SM dont la porteuse est modulé en fréquence par le message d'urgence à basse fréquence ou numérique MU. La porteuse du signal SM a une fréquence sensiblement égale à la fréquence porteuse intermédiaire commune Fq. Chaque répéteur RFMi comprend un commutateur CM dont la sortie est reliée à la première entrée du deuxième mélangeur ME2. Les entrées du commutateur sont reliées respectivement à la sortie du filtre passe-bande FPB et à la sortie du modulateur de fréquence MOD. Le signal SM remplace le signal filtré à fréquence Fq sortant du filtre FPB lorsque le commutateur CM est télécommandé pour transmettre un message d'urgence aux terminaux mobiles traversant le tunnel, périodiquement pendant une durée prédéterminée par exemple.

En revenant aux figures 7 et 8, les 24 signaux en modulation de fréquence à fréquences porteuses F1 à F24 régénérés dans les répéteurs RFM1 à RFM24 sont multiplexés en fréquence à travers les multiplexeurs MUX1 et MUX2, puis sont filtrés ensemble dans la bande BFM = [87,5 ; 108] MHz dans le filtre FFM et sont amplifiés dans l'amplificateur de puissance à large bande AS pour être appliqués à travers le multiplexeur MF au multiplexeur-démultiplexeur MD relié à la première extrémité A1 du câble rayonnant.

## Revendications

1. Système de radiocommunication comprenant plusieurs tronçons (CR1, CR2, CR3) d'un premier câble rayonnant ayant chacun des première et deuxième extrémités (A1,B1 ; A2,B2 ; A3,B3), et plusieurs moyens répéteurs (CAC1, CAC2) interconnectés en cascade et connectés chacun entre la deuxième extrémité (B1, B2) d'un premier tronçon respectif (CR1, CR2) et la première extrémité (A2, A3) d'un deuxième tronçon respectif (CR2, CR3), caractérisé en ce que le premier câble rayonnant propage à la fois unidirectionnellement des premiers signaux (SR1) avec des fréquences porteuses comprises dans une première bande de fréquence (BF1) et bidirectionnellement des deuxièmes signaux (SR2) avec des fréquences porteuses comprises dans une deuxième bande de fréquence (BF2) supérieure à la première bande de fréquence (BF1), et chaque moyen répéteur (CAC1, CAC2) comprend un premier moyen d'amplification (AM) pour amplifier unidirectionnellement des premiers signaux (SR1), un deuxième moyen d'amplification (REP2) pour amplifier bidirectionnellement des deuxièmes signaux (SR2), un premier moyen de filtrage (F1) pour filtrer unidirectionnellement les premiers signaux depuis la deuxième extrémité (B1, B2) du premier tronçon respectif (CR1, CR2) vers le premier moyen d'amplification (AM), un deuxième moyen de filtrage (F2) pour filtrer bidirectionnellement des deuxièmes signaux (SR2) entre la deuxième extrémité (B1, B2) du premier tronçon respectif (CR1, CR2) et le deuxième moyen d'amplification (REP2), un autre premier moyen de filtrage (F1) pour filtrer unidirectionnellement les premiers signaux depuis le premier moyen d'amplification (AM) vers la première extrémité (A2, A3) du deuxième tronçon respectif (CR2, CR3) et un autre deuxième moyen de filtrage (F2) pour filtrer bidirectionnellement des deuxièmes signaux (SR2) entre le deuxième moyen d'amplification (REP2) et la première extrémité (A2, A3) du deuxième tronçon respectif (CR2, CR3).

2. Système conforme à la revendication 1, comprenant un premier moyen répéteur (REP1) pour recevoir et émettre les premiers signaux (SR1) depuis et vers un réseau de services radioélectriques (RSR), une première station de base (BTS2) pour recevoir et transmettre les deuxièmes signaux (SR2) depuis et vers un premier réseau de radiotéléphonie mobile (RRM2), un moyen multiplexeur-démultiplexeur (MD) pour multiplexer en fréquence les premiers signaux (SR1) reçus par le premier moyen répéteur (REP1) avec des deuxièmes signaux (SR2) ayant au moins une fréquence porteuse prédéterminée et reçus par la première station de base en un signal multiplex appliqué à la première extrémité (A1) d'un premier tronçon (CR1) du premier câble rayonnant et pour appliquer des deuxièmes signaux (SR2) depuis la première extrémité (A1) du premier tronçon (CR1) à la première station de base (BTS2), un moyen de transmission à fibre optique (FO11) pour transmettre des premiers signaux (SR1) depuis la deuxième extrémité (B3) du dernier tronçon (CR3) du premier câble rayonnant vers le premier moyen répéteur (REP1), et plusieurs moyens à fibre optique (F021, F022) pour transmettre bidirectionnellement des deuxièmes signaux (SR2) ayant des fréquences porteuses prédéterminées différentes entre la première station de base (BTS2) et les deuxièmes moyens d'amplification (REP2) dans lesdits moyens répéteurs (CAC1, CAC2).

3. Système conforme à la revendication 2, dans lequel chaque moyen répéteur (CAC1a, CAC2a) comprend un troisième moyen d'amplification (REP3) pour amplifier bidirectionnellement des troisièmes signaux (SR3) avec des fréquences porteuses comprises dans une troisième bande de fréquence (BF3) sensiblement adjacente à la deuxième bande de fréquence (BF2), un troisième moyen de filtrage (F3) pour filtrer bidirectionnellement des troisièmes signaux (SR3) entre la deuxième extrémité (B1, B2) du premier tronçon respectif (CR1, CR2) et le troisième moyen d'amplification (REP3), un autre troisième moyen de filtrage (F3) pour filtrer bidirectionnellement des troisièmes signaux (SR3) entre le troisième moyen d'amplification (REP3) et la première extrémité (A2, A3) du deuxième tronçon respectif (CR2, CR3), une deuxième station de base (BTS3) pour recevoir et transmettre les troisièmes signaux (SR3) depuis et vers un deuxième réseau de radiotéléphonie mobile (RRM3), ledit moyen de multiplexage et démultiplexage (MD) multiplexant en fréquence également des troisièmes signaux (SR3) de la deuxième station de base ayant au moins une fréquence porteuse prédéterminée et démultiplexant en fréquence depuis la première extrémité (A1) du premier tronçon (CR1) les deuxièmes et troisièmes signaux à appliquer aux première et deuxième stations de base respectivement, et plusieurs moyens à fibre optique (F031, F032) pour transmettre bidirectionnellement des troisièmes signaux (SR3) ayant des fréquences porteuses prédéterminées différentes entre la deuxième station de base (BTS3) et les troisièmes moyens d'amplification (REP3).

4. Système conforme à la revendication 2 ou 3, dans lequel chaque moyen répéteur (CAC1a, CAC2a) comprend un quatrième moyen d'amplification (REP4) pour amplifier bidirectionnellement des quatrièmes signaux (SR4) avec des fréquences porteuses comprises dans une quatrième bande de fréquence (BF4) supérieure à la deuxième bande de fréquence (BF2), un quatrième moyen de filtrage (F4) pour filtrer bidirectionnellement des quatrièmes signaux (SR4) entre la deuxième extrémité (B1, B2) du premier tronçon respectif (CR1, CR2) et le quatrième moyen d'amplification (REP4), un autre quatrième moyen de filtrage (F4) pour filtrer bidirectionnellement des quatrièmes signaux (SR4) entre le quatrième moyen d'amplification (REP3) et la première extrémité (A2, A3) du deuxième tronçon respectif (CR2, CR3), une troisième station de base (BTS3) pour recevoir et transmettre les quatrièmes signaux (SR4) depuis et vers un troisième réseau de radiotéléphonie mobile (RRM4), ledit moyen de multiplexage et démultiplexage (MD) multiplexant en fréquence également des quatrièmes signaux (SR4) de la troisième station de base ayant au moins une fréquence porteuse prédéterminée et démultiplexant en fréquence depuis la première extrémité (A1) du premier tronçon (CR1) au moins les deuxièmes et quatrièmes signaux à appliquer aux première et troisième station de base respectivement, et plusieurs moyens à fibre optique (FO41, F042) pour transmettre bidirectionnellement des quatrièmes signaux (SR4) ayant des fréquences porteuses prédéterminées différentes entre la troisième station de base (BTS4) et les quatrièmes moyens d'amplification (REP4).

5. Système conforme aux revendications 3 et 4, dans lequel les premiers, deuxièmes et troisièmes signaux ont des bandes de fréquence (BF1, BF2, BF3) inférieures au gigahertz environ, et les quatrièmes signaux (SR4) ont une bande de fréquence (BF4) supérieure au gigahertz, et le premier câble rayonnant a au moins un tronçon de câble (CR1) comprenant deux moyens d'aiguillage (AIG) pour aiguiller chacun des quatrièmes signaux (SR4) depuis une extrémité respective (A1, B1) du tronçon de câble (CR1) vers une antenne (AN4) et les premiers, deuxièmes et troisièmes signaux (SR1, SR2, SR3) depuis ladite extrémité respective (A1, B1) vers un long tronçon de câble rayonnant (LCR) reliant les deux moyens d'aiguillage (AIG).

6. Système conforme à l'une quelconque des revendications 1 à 5, comprenant un deuxième câble rayonnant (CR4, CR5, CR6), et dans lequel chaque moyen répéteur (CAC1b, CAC2b) est également interconnecté entre la deuxième extrémité (B4, B5) d'un premier tronçon respectif (CR4, CR5) du deuxième câble rayonnant et la première extrémité (A5, A6) d'un deuxième tronçon respectif (CR5, CR6) du deuxième câble rayonnant et comprend en outre un autre premier moyen d'amplification (AM2) pour amplifier unidirectionnellement des premiers signaux (SR1) filtrés par un premier moyen de filtrage (F1) depuis la deuxième extrémité (B4, B5) du premier tronçon respectif (CR4, CR5) du deuxième câble rayonnant en des signaux amplifiés vers la première extrémité (A5, A6) du deuxième tronçon respectif (CR5, CR6) du deuxième câble rayonnant à travers un autre premier moyen de filtrage (F1), un moyen (RT5, R2) pour appliquer des premiers signaux depuis ledit autre premier moyen d'amplification (AM2) à la première extrémité (A2, A3) du deuxième tronçon respectif (CR2, CR3) du premier câble rayonnant en réponse à un défaut de fonctionnement dans ledit un premier moyen d'amplification (AM1), un moyen (RT2, R5) pour appliquer des premiers signaux depuis le premier moyen d'amplification (AM1) à la première extrémité (A5, A6) du deuxième tronçon respectif (CR5, CR6) du deuxième câble rayonnant en réponse à un défaut de fonctionnement dudit autre premier moyen d'amplification (AM2), un moyen (RT4, R1) pour appliquer des premiers signaux depuis la deuxième extrémité (B4, B5) du premier tronçon respectif (CR4, CR5) du deuxième câble rayonnant audit un premier moyen d'amplification (AM1) en réponse à un défaut dans le premier tronçon respectif (CR1, CR2) du premier câble rayonnant, et un moyen (RT1, R4) pour appliquer des premiers signaux depuis la deuxième extrémité (B1, B2) du premier tronçon respectif (CR1, CR2) du premier câble rayonnant audit autre premier moyen d'amplification (AM2) en réponse à un défaut dans le premier tronçon respectif (CR4, CR5) du deuxième câble rayonnant.

7. Système conforme à l'une quelconque des revendications 1 à 5, comprenant un deuxième câble rayonnant (CR4, CR5, CR6), et dans lequel chaque moyen répéteur (CAC1b, CAC2b) est également interconnecté entre la deuxième extrémité (B4, B5) d'un premier tronçon respectif (CR4, CR5) du deuxième câble rayonnant et la première extrémité (A5, A6) d'un deuxième tronçon respectif (CR5, CR6) du deuxième câble rayonnant et comprend en outre un autre premier moyen d'amplification (AM2) pour amplifier unidirectionnellement des premiers signaux (SR1) filtrés par un premier moyen de filtrage (F1) depuis la deuxième extrémité (B4, B5) du premier tronçon respectif (CR4, CR5) du deuxième câble rayonnant en des signaux amplifiés vers la première extrémité (A5, A6) du deuxième tronçon respectif (CR5, CR6) du deuxième câble rayonnant à travers un autre premier moyen de filtrage (F1), un moyen (RT5, R2) pour appliquer des premiers signaux depuis ledit autre premier moyen d'amplification (AM2) vers la première extrémité (A2, A3) du deuxième tronçon respectif (CR2, CR3) du premier câble rayonnant en réponse à un défaut de fonctionnement dans ledit un premier moyen d'amplification (AM1) ou à un défaut dans le premier tronçon respectif (CR1, CR2) du premier câble rayonnant, et un moyen (RT2, R5) pour appliquer des premiers signaux depuis le premier moyen d'amplification (AM1) à la première extrémité (A5, A6) du deuxième tronçon respectif (CR5, CR6) du deuxième câble rayonnant en réponse à un défaut de fonctionnement dudit autre premier moyen d'amplification (AM2), ou à un défaut dans le premier tronçon respectif (CR4, CR5) du deuxième câble rayonnant.

8. Système conforme à l'une quelconque des revendications 1 à 7, comprenant plusieurs moyens (RFM1 à RFM24) recevant chacun plusieurs signaux en modulation de fréquence (F1 à F24) pour répéter respectivement lesdits signaux en modulation de fréquence, et un moyen (MF, MD) pour multiplexer en fréquence les signaux en modulation de fréquence répétés avec les premiers signaux (SR1) et des deuxièmes signaux (SR2) en un signal multiplex à appliquer à la première extrémité (A1) du premier câble rayonnant.

9. Système conforme à la revendication 8, dans lequel chaque moyen pour répéter un signal en modulation de fréquence respectif (RFMi) comprend un moyen (OSi) pour produire un signal à une fréquence locale respective (Fli) qui est nettement inférieure à la fréquence porteuse (Fi) du signal en modulation de fréquence respectif à répéter, à des deuxièmes entrées de premier et deuxième mélangeurs (ME1, ME2), le premier mélangeur (ME1) ayant une première entrée recevant lesdits plusieurs signaux en modulation de fréquence et produisant un signal à une fréquence porteuse intermédiaire (Fq) commune à tous les moyens pour répéter (RFM1 à RFM24) et égale à la différence entre la fréquence porteuse du signal en modulation de fréquence respectif et la fréquence locale respective, et le deuxième mélangeur (ME2) ayant une entrée recevant le signal à fréquence porteuse intermédiaire commune (Fq) à travers un filtre passe-bande (FPB) ayant sensiblement la largeur de bande du signal en modulation de fréquence respectif, et une sortie produisant uniquement le signal en modulation de fréquence respectif avec une fréquence porteuse égale à la somme de ladite fréquence porteuse intermédiaire commune et la fréquence locale respective.

10. Système conforme à la revendication 9, dans lequel la bande de fréquence des filtres passe-bande (FPB) dans tous les moyens pour répéter (RFM1 à RFM24) est centrée sur la fréquence porteuse intermédiaire commune (Fq) qui est sensiblement supérieure à la largeur de la bande (BFM) de l'ensemble des signaux en modulation de fréquence (F1 à F24).

11. Système conforme à la revendication 9 ou 10, dans lequel les moyens (OSi) pour produire des signaux à fréquences locales (Fli) sont constitués par un synthétiseur de fréquence programmable.

12. Système conforme à l'une quelconque des revendications 9 à 11, comprenant un modulateur de fréquence (MOD) pour moduler une porteuse avec sensiblement ladite fréquence porteuse intermédiaire commune (Fq) par un message prédéterminé (MU), en un signal de modulation, et dans lequel chaque moyen répéteur de signal en modulation de fréquence (RFMi) comprend un moyen (CM) pour commuter le signal de modulation avec le signal à la fréquence porteuse intermédiaire commune (Fq) produit par le filtre passe-bande (FPB).

13. Système conforme à l'une quelconque des revendications 9 à 12, comprenant un moyen (MUX1, MUX2) pour multiplexer en fréquence les signaux en modulation de fréquence (F1 à F24) répétés dans les moyens pour répéter (RFM1 à RFM24), et un filtre passe-bande (BFM) et un amplificateur de puissance à large bande (AS) pour filtrer et amplifier les signaux en modulation de fréquence multiplexés.
